Europäisches Patentamt

European Patent Office

Office européen des brevets

(11) Numéro de publication : **0 014 197**
**B1**

# (12) FASCICULE DE BREVET EUROPÉEN

(45) Date de publication du fascicule du brevet :
03.11.82

(21) Numéro de dépôt : 78900055.1

(22) Date de dépôt : 18.07.78

(86) Numéro de dépôt international :
PCT/FR 78/00010

(87) Numéro de publication internationale :
WO WO/79000 (08.02.79 Gazettee 79/03)

(51) Int. Cl.³ : **F 17 C  9/02**, B 60 P  3/22,
F 28 D  3/02

(54) **CENTRALE AUTONOME DE VAPORISATION DE FLUIDES CRYOGENIQUES.**

(30) Priorité : 22.07.77 FR 7723352

(43) Date de publication de la demande :
20.08.80 (Bulletin 80/17)

(45) Mention de la délivrance du brevet :
03.11.82 Bulletin 82/44

(84) Etats contractants désignés :
CH DE GB LU SE

(56) Documents cités :
CA A 873 142
DE A 2 061 435
GB A 977 830
US A 2 035 396
US A 3 225 552

(73) Titulaire : SOCIETE BBM S.A.
39-41, rue du 8 mai 1945
F-69320 Feyzin (FR)

(72) Inventeur : BO, Ermanno
Chemin de Monte Ferrand, Ternay
F-69360 Saint Symphorien d'Ozon (FR)

(74) Mandataire : Schmitt, John
9 Rue Pizay
F-69001 - Lyon (FR)

EP 0 014 197 B1

Imprimerie Jouve, 18, rue St-Denis, 75001 Paris, France

Centrale autonome de vaporisation de fluides cryogéniques

La présente invention concerne une centrale de vaporisation permettant de transformer des fluides cryogéniques tels que par exemple l'azote, l'oxygène, l'hydrogène, mais non exclusivement, de l'état liquide à l'état gazeux par réchauffage desdits fluides circulant dans un faisceau tubulaire immergé à l'intérieur d'un bac.

Actuellement on obtient un fluide à l'état gazeux dans des installations de réchauffage atmosphérique ou par réchauffage à eau perdue. C'est le cas de la centrale de vaporisation décrite dans le brevet U.S. N° 2.035.396 qui comprend un générateur de chaleur, un bac, un circuit de réchauffage de l'eau du bac, un échangeur comportant un ou plusieurs serpentins immergés dans le bac, des moyens de régulation de pression et de contrôle de sécurité, le générateur de chaleur pouvant être une source d'eau chaude ou l'atmosphère ambiante ou un gaz comprimé et chauffé, ces éléments étant fixes ou installés sur un véhicule routier comme décrit dans le brevet GB N° 977.830. Ces installations sont peu rentables parce qu'elles consomment une importante quantité d'eau.

Pour pallier à cet inconvénient, le but de l'invention est de fournir un dispositif de réchauffage par circulation d'eau chaude constamment recyclée, donc économique.

Dans une centrale de vaporisation du type susmentionné, une caractéristique de l'invention réside dans le fait que l'eau diffusée par des rampes de réchauffage est constamment recyclée par l'intermédiaire d'autres rampes perforées qui aspirent l'eau du bac grâce à l'action de deux pompes qui renvoient cette eau à la chaudière, tandis qu'un réservoir compense les pertes d'eau par évaporation.

Un autre dispositif de réchauffage par circulation d'eau chaude constamment recyclée est déjà décrit pour une centrale de vaporisation dans le CA-A-873 142.

Suivant une autre caractéristique de l'invention, le circuit de recyclage de l'eau de réchauffage est contrôlé en température par un autorégulateur commandant une vanne à trois voies qui oriente l'eau soit vers la chaudière soit de nouveau vers le bac, suivant la température constatée et en fonction de celle programmée.

Suivant une autre caractéristique de l'invention, le bac est calorifugé pour maintenir la température de l'eau de réchauffage.

Suivant une autre caractéristique de l'invention, le bac est équipé de moyens antivibratoires des faisceaux de tubes constituant les circuits de réchauffage et de recyclage.

Les dessins annexés qui illustrent un exemple non limitatif de l'invention permettront de bien comprendre la description qui va suivre en s'y référant :

Les figures 1, 1a et 1b représentent schématiquement les différents éléments constituant la centrale et les circuits d'eau et/ou de vapeur et de gaz qu'elle commande.

La figure 2 est une vue en élévation et en coupe du bac avec l'échangeur immergé.

La figure 3 est une vue en plan du bac au niveau supérieur.

Les figures 4 et 5 sont des vues en plan montrant respectivement les niveaux CC et DD de la figure 2.

La figure 6 est une vue de face d'un des châssis supports de l'échangeur.

La figure 7 est une vue de côté et en coupe du bac suivant la ligne BB de la figure 2.

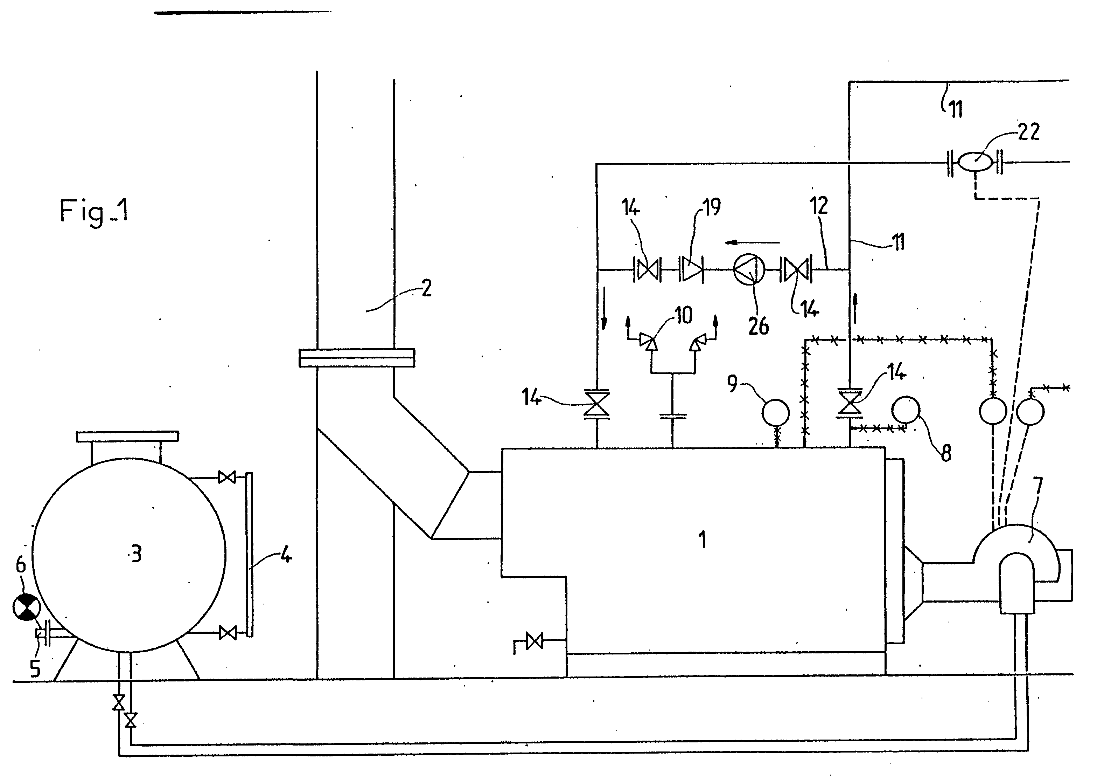

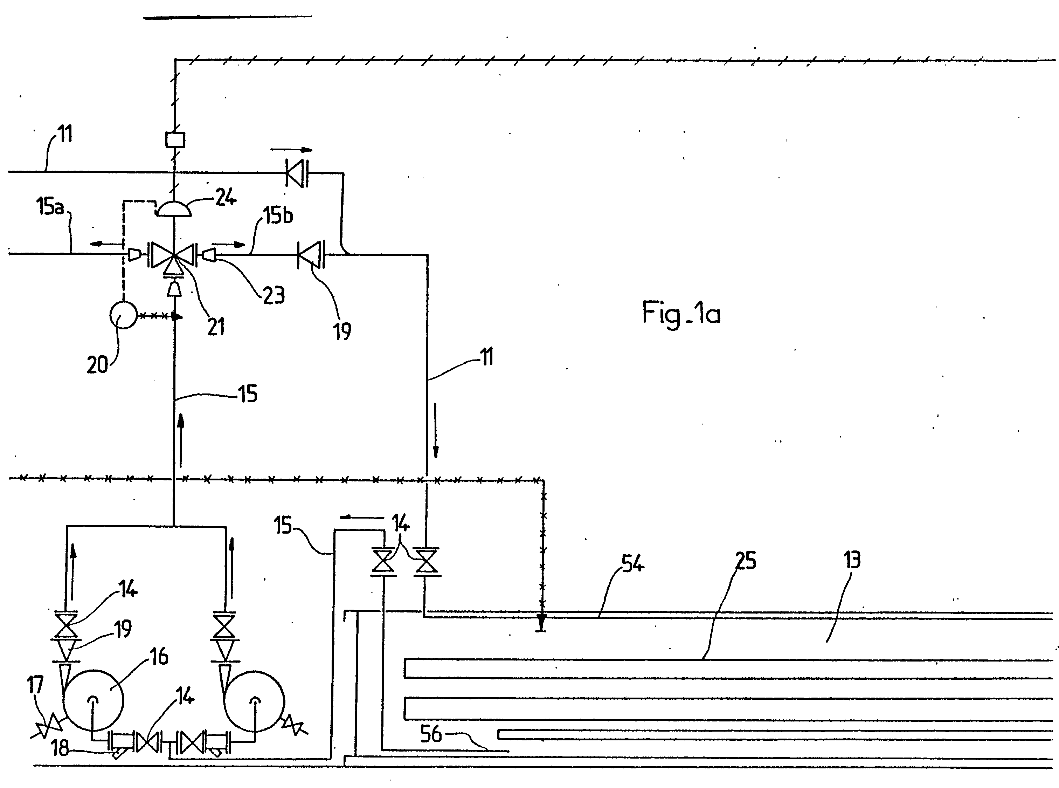

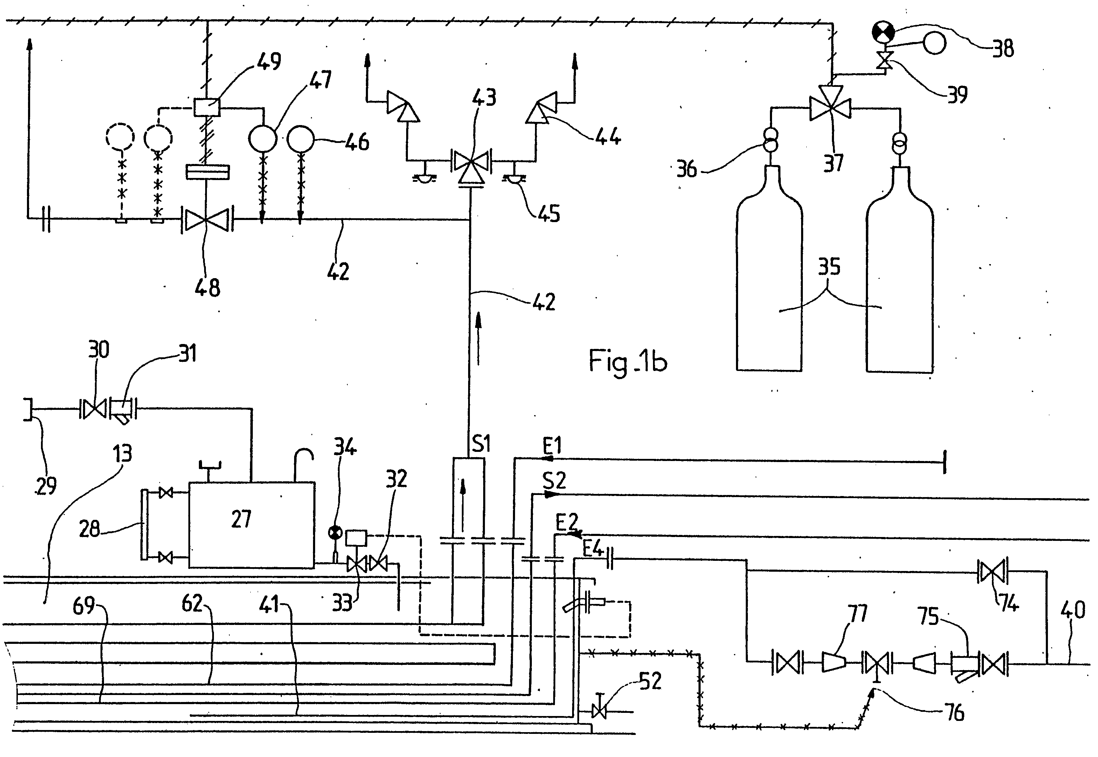

Sur la figure 1 on voit, dans l'exemple choisi, que le générateur de chaleur est une chaudière 1 munie d'une cheminée 2 ou d'un accélérateur de fumée suivant la demande ; la chaudière est alimentée par un réservoir de fuel 3 comportant un indicateur 4 et un contrôleur 5 du niveau du fuel ainsi qu'une alarme 6.

La chaudière 1 et son brûleur 7 sont eux aussi équipés des appareils traditionnels de régulation et de contrôle, notamment un thermomètre 8, un manomètre 9 et une soupape de sûreté 10.

De la chaudière 1 part le circuit d'eau chaude 11 dont la température est voisine de 90°. Sur la figure 1a on voit que cette canalisation alimente des rampes 54 de réchauffage de l'eau du bac 13. Ces rampes 54 sont percées de trous à intervalles réguliers de sorte que l'eau chaude se diffuse dans l'eau du bac au fond duquel elle est reprise dans d'autres rampes de recyclage 56 et acheminée dans une canalisation 15 de retour à la chaudière grâce à l'action de deux pompes 16 munies de purges 17 et intercalées dans ce circuit qui comporte des filtres à tamis 18, d'autres vannes à passage direct 14 et des clapets anti-retour 19.

Ce circuit 15 de retour à la chaudière est contrôlé en température par un autorégulateur 20 commandant une vanne mélangeuse 21 à trois voies qui oriente l'eau, soit vers la chaudière par 15a, soit de nouveau vers le bac par 15b, suivant la température constatée et en fonction de celle programmée.

Le cheminement vers le bac est éventuellement stoppé par un clapet anti-retour 19 tandis que le passage vers la chaudière s'effectue par l'intermédiaire d'un contrôleur de circulation 22, chacune de ces deux canalisations 15a et 15b étant, au départ de la vanne mélangeuse 21, assortie d'une réduction 23. A l'arrivée à la chaudière, la canalisation 15a passe par une vanne à passage direct 14. Un système d'alarme 24 est placé au niveau de la vanne mélangeuse 21.

Parallèlement à ce circuit de réchauffage, un circuit traditionnel de sécurité fonctionne au niveau de la chaudière pour compenser les différences de température trop importantes au retour de l'eau du circuit 15 et éviter le « point de rosée ». Ce circuit parallèle 12 bénéficie de l'action de l'accélérateur 26, à débit réglable, qui régit ainsi la circulation de réchauffage susmentionnée et comporte un clapet anti-retour 19 entre deux vannes à passage direct 14.

L'échangeur 25 immergé dans le bac 13 est complété sur la figure 1b qui illustre en même temps l'alimentation en eau dudit bac et du circuit de réchauffage, par la participation d'une réserve d'air comprimé qui assure le fonctionnement des appareils, par la possibilité d'un réchauffage par un circuit de vapeur, par le circuit normal du fluide avec sa distribution et enfin par son circuit de mise en pression rapide.

Le bac 13 et les rampes 54 de réchauffage sont donc alimentés par un réservoir 27 assorti d'un indicateur de niveau 28 et raccordé en 29 au réseau client par une canalisation munie d'un robinet d'arrêt 30 et d'un filtre à tamis 31.

L'eau est distribuée par une canalisation qui comporte un autre robinet d'arrêt 32 avec électrovanne 33 et système d'alarme 34.

Lorsque le contrôleur de niveau 28, qui équipe le réservoir 27, constate une diminution sensible du niveau prévu, il déclenche l'ouverture du robinet pour rétablir l'équilibre fonctionnel.

Tous les éléments de régulation de la centrale sont manœuvrés pneumatiquement et/ou électriquement. Pneumatiquement grâce à un circuit d'air comprimé symbolisé par deux bouteilles 35 équipées de détendeur 36 et d'une vanne à trois voies 37, d'un système d'alarme 38 avec vanne d'arrêt 39.

On a également représenté sur ce schéma 1b une conduite de vapeur 40 qui entre en E4 dans une rampe perforée de diffusion 41 pour réchauffer l'eau du bac 13. Ce dispositif peut, par exemple, utiliser des jets de vapeur perdus ce qui permet de stopper la chaudière 1 et d'économiser du fuel.

Sur le trajet de cette conduite de vapeur 40 sont intercalés les appareils traditionnels de fonction et de contrôle notamment des vannes d'arrêt 74, un filtre à tamis 75, un régulateur de température 76 placé entre deux réductions 77.

Le fluide à l'état liquide entre en E1 dans un serpentin principal 62 et ressort gazeux à + 15 °C en S1 pour se diriger vers le poste d'utilisation dans une canalisation 42 qui comporte un ensemble de sécurités, notamment au niveau d'une vanne à trois voies 43 contrôlée par deux soupapes 44 et deux disques d'éclatement 45 tarés à une pression supérieure aux soupapes 44.

La distribution s'effectue par cette canalisation 42 qui est assortie d'un indicateur 46, d'un régulateur 47 de la température et/ou de la pression et d'une vanne pneumatique 48 en rapport avec le circuit électrique et pneumatique par la boîte à bornes 49.

Le fluide à l'état liquide entre également en E2 dans un second serpentin 69 dit « de mise en pression rapide », où il se transforme en fluide gazeux pour ressortir par S2 et retourner au stockage pour en accélérer le débit vers le serpentin principal 62.

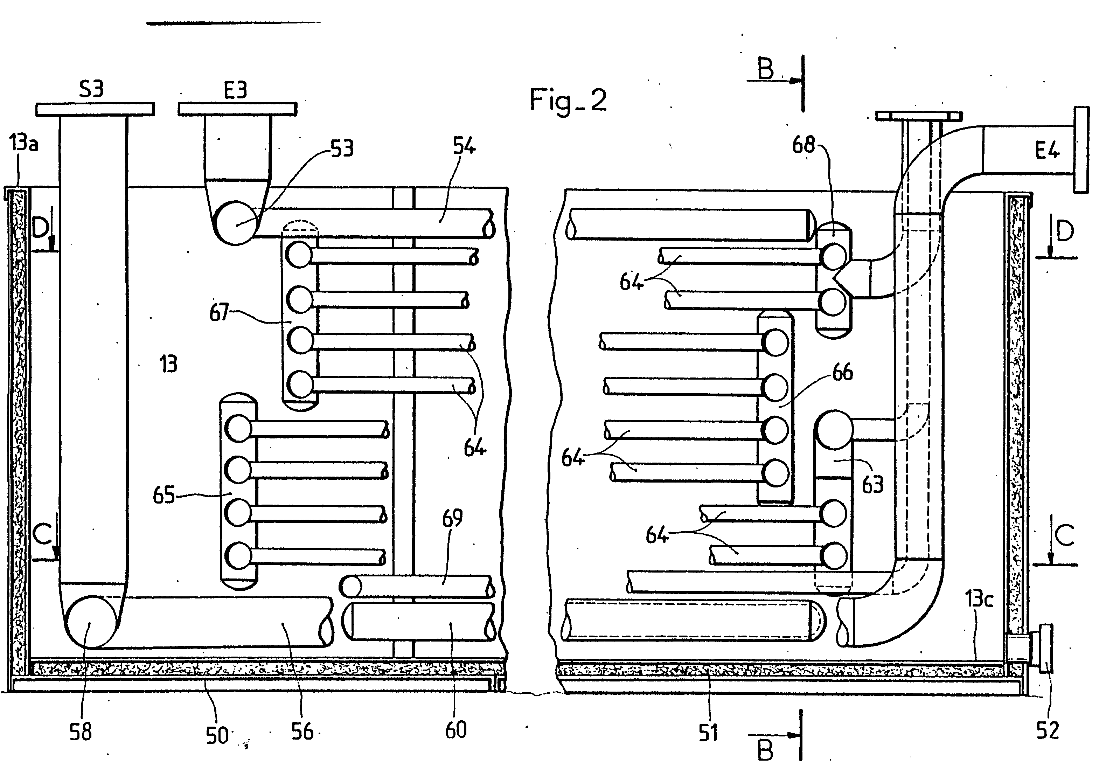

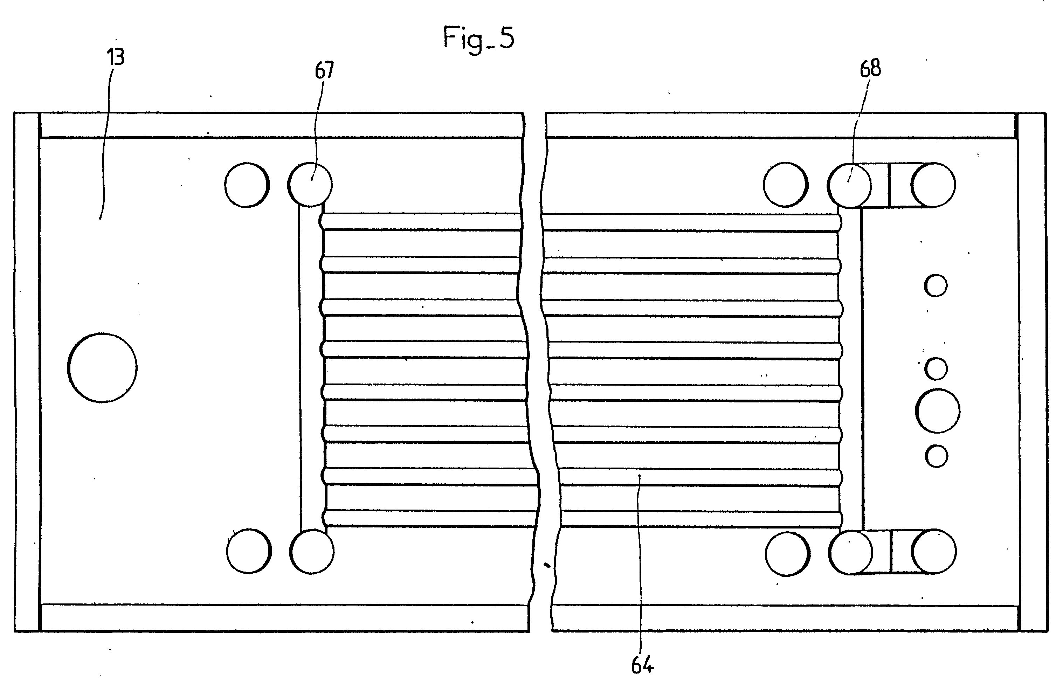

Les figures 2 et 5 montrent en détail la construction du bac, de l'échangeur et des rampes de réchauffage et de recyclage de l'eau dudit bac.

On voit que ce bac est une vaste cuve rectangulaire avec un double fond 50. Ses parois verticales 13a ainsi que le premier fond 13C comportent une isolation thermique 51. Un robinet de purge 52 est prévu à la partie inférieure d'un de ses côtés (figure 2).

L'eau de réchauffage provenant de la chaudière par la canalisation 11 arrive dans le bac 13 par l'entrée E2 pour se répartir dans un collecteur transversal 53 duquel partent au moins quatre tuyaux 54 fermés à leur extrémité opposée au collecteur, percés à leur partie inférieure à intervalles réguliers et sur toute leur longueur de trous 55, de manière à former des rampes longitudinales occupant sensiblement toute la longueur du bac pour diffusion de l'eau chaude vers le bas dudit bac.

Cette eau est recyclée par pompage au niveau de deux tuyaux longitudinaux 56, situés près du fond du bac. Ces tuyaux sont d'un diamètre plus important et sont percés en chicane de trous 57, fermés à une extrémité et réunis par l'autre extrémité à un collecteur 58 en rapport avec la tuyauterie de retour 15 par la sortie S3.

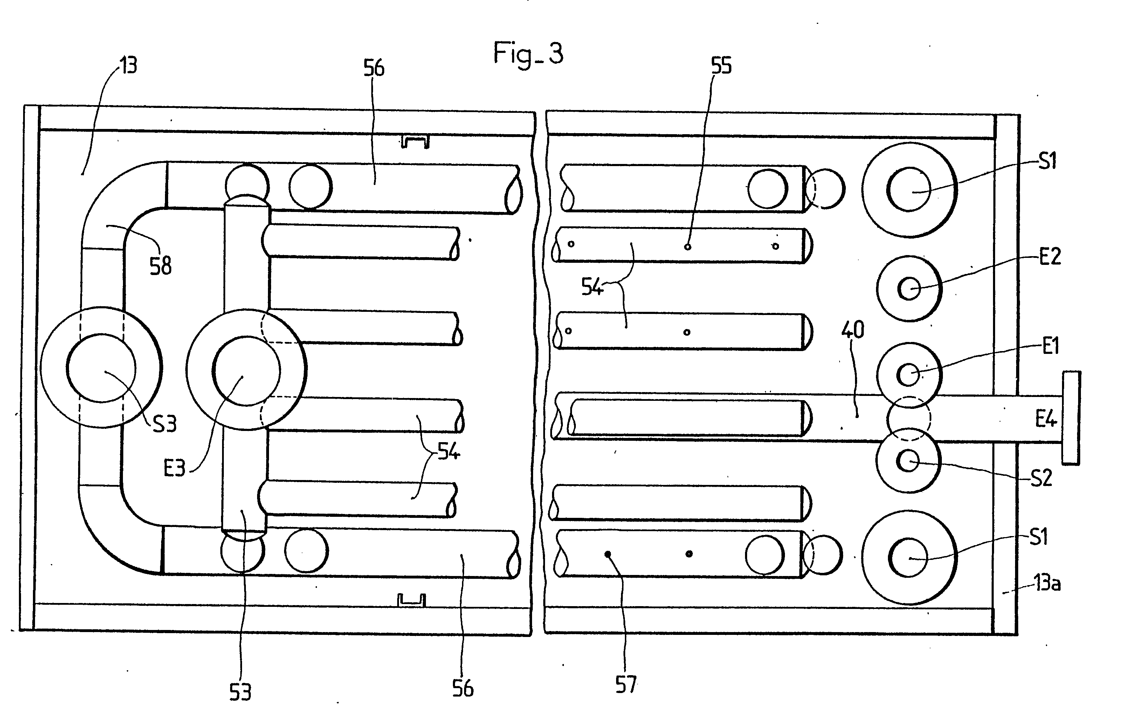

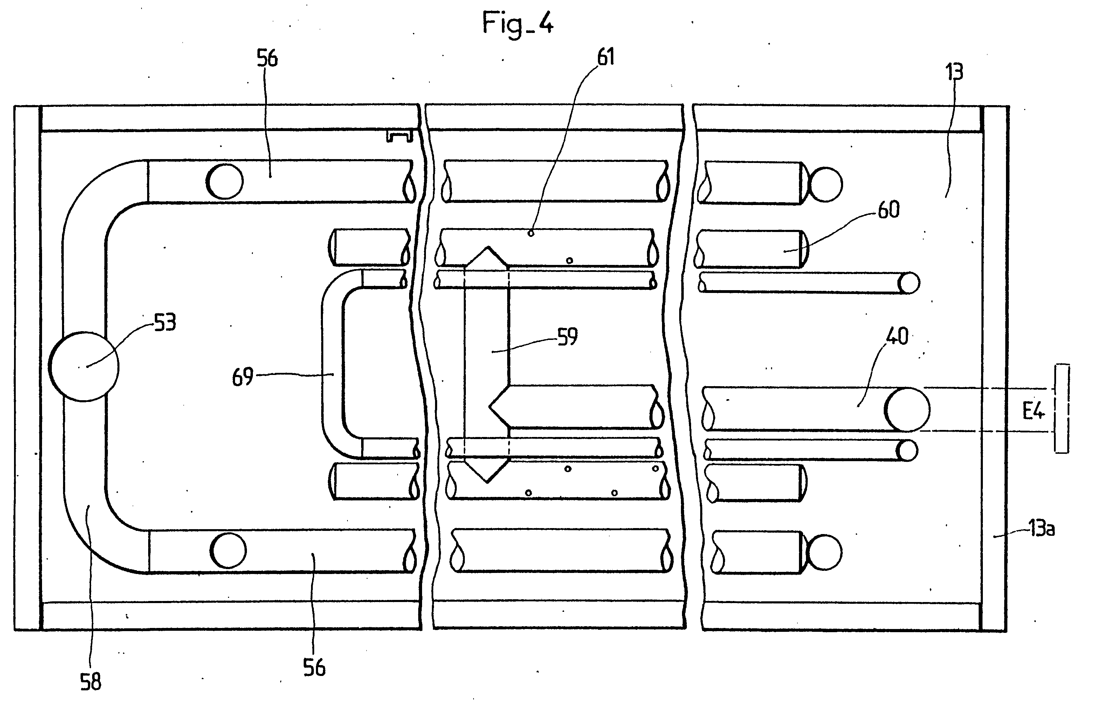

Sur les figures 3, 4 et 5, on voit que le circuit 40 de réchauffage par la vapeur entre en E4, qu'il est constitué par un tuyau d'un diamètre légèrement inférieur à celui des tuyaux de réchauffage par eau. Il aboutit à un collecteur 59, situé approximativement vers la partie médiane du bac et qui alimente deux rampes parallèles longitudinales 60 percées de trous 61 en chicane, pour diffusion de la vapeur. Ce circuit vapeur se trouve au même niveau que le circuit de récupération de l'eau de réchauffage.

L'échangeur 25 dans lequel s'effectue la transformation du fluide de l'état liquide à l'état gazeux occupe en longueur l'espace libre du bac entre les arrivées et départs des circuits de réchauffage et pratiquement sa largeur. Il est constitué par deux serpentins l'un 62 dit serpentin principal comportant une entrée E1 qui dessert un premier collecteur 63 transversal duquel part un double faisceau de tuyaux 64, parallèles qui serpentent du bas vers le haut en deux allers et retours repris à chaque extrémité par des collecteurs successifs 65-66-67 et un dernier 68 qui aboutit à la sortie S1 du fluide à l'état gazeux qui part vers le réseau de distribution.

Le second serpentin dit « serpentin de mise en pression rapide » comporte une entrée E2 située à environ un quart de la largeur du bac, desservant un tuyau 69 qui descend au-dessus du faisceau inférieur du serpentin principal, est coudé à 90° pour régner au niveau précité sous forme d'un U allongé dont la branche retour, coudée à 90° remonte vers une sortie S2 située symétriquement à l'entrée E2 à la même distance des côtés du bac. Le fluide à l'état gazeux qui sort en S2 alimente le circuit d'activation de débit du fluide du serpentin principal 62.

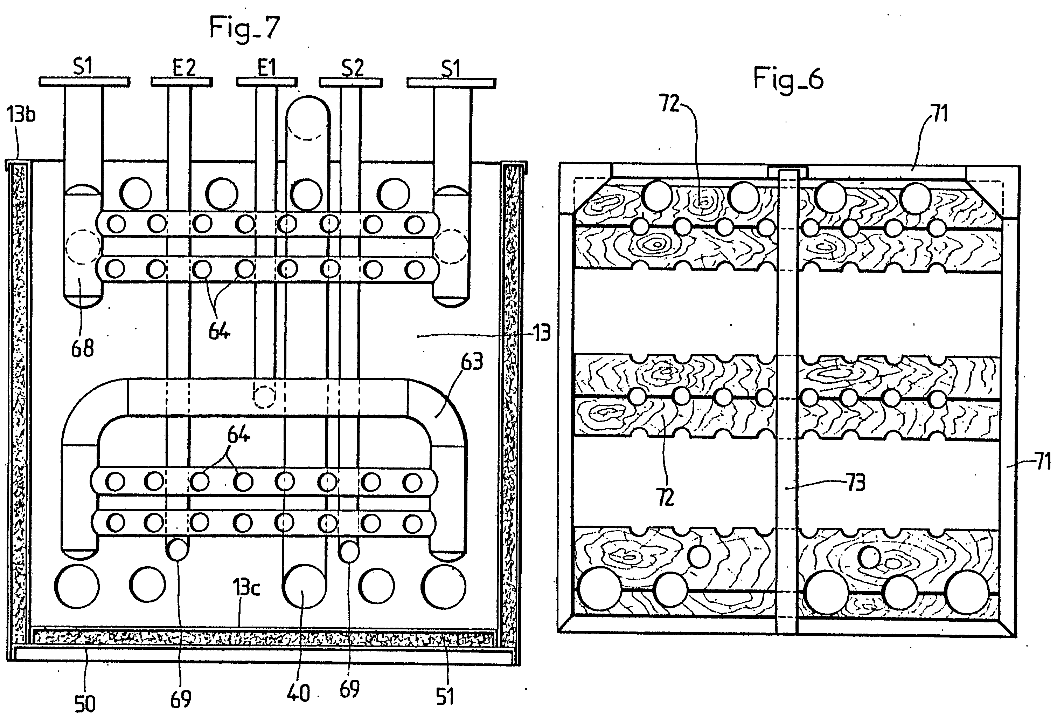

La figure 6 montre en élévation de face un des quatre châssis supportant le serpentin principal. Ces châssis sont constitués par un cadre métallique 71 enserrant des planches 72 creusées d'alvéoles en vis-à-vis pour le logement des faisceaux de tuyaux. Ces châssis sont conçus pour amortir les vibrations susceptibles de se produire dans le faisceau lors du fonctionnement. Un fer plat central 73 réunit verticalement les bords supérieurs et inférieurs des cadres et coopère avec un dispositif (non représenté) fixé par boulon à la partie supérieure desdits cadres pour permettre le levage du serpentin.

## Revendications

1. Centrale autonome pour l'obtention d'un fluide à l'état gazeux par réchauffement de fluides cryogéniques à l'état liquide, comprenant un générateur de chaleur (1), un bac (13), un circuit de réchauffage (11) de l'eau du bac (13), un échangeur (25) comportant un ou plusieurs serpentins immergés dans le bac, des moyens de régulation de pression et de contrôle de sécurité, le générateur de chaleur pouvant être une source d'eau chaude ou l'atmosphère ambiante ou un gaz comprimé et chauffé, ces éléments étant fixes ou installés sur un véhicule routier, caractérisée par le fait que l'eau de réchauffage est constamment recyclée par l'intermédiaire de rampes de diffusion (54) occupant la partie supérieure du bac (13) et de rampes d'aspiration (56) situées près du fond du bac (13) et reliées à des pompes (16) ; que le circuit de recyclage de l'eau de réchauffage est contrôlé par un autorégulateur (20) commandant une vanne (21) à trois voies qui oriente l'eau soit vers le générateur de chaleur (1) soit de nouveau vers le bac (13) suivant la température constatée et en fonction de celle programmée.

2. Centrale suivant la revendication 1, caractérisée par le fait que les rampes de diffusion de l'eau de réchauffage qui alimentent le bac (13) comprennent au moins quatre tuyaux (54) reliés entre eux par un collecteur transversal (53) communiquant avec une tuyauterie d'alimentation (11), chaque tuyau (54) étant fermé à son extrémité opposée au collecteur et percé à sa partie inférieure à intervalles réguliers et sur toute sa longueur de trous (55).

3. Centrale suivant la revendication 1, caractérisée par le fait que les rampes d'aspiration (56) de l'eau de réchauffage comprennent au moins deux tuyaux longitudinaux (56) percés chacun de trous (57) en chicane, fermés à une extrémité et réunis à l'autre extrémité par un collecteur (58) communiquant avec une tuyauterie (15) de retour au générateur de chaleur (1).

4. Centrale suivant la revendication 1, caractérisée par le fait que le bac (13) est à double fond (50), que son premier fond, ses parois latérales et son couvercle sont calorifugés.

5. Centrale suivant la revendication 1, caractérisée par le fait que les tubes et tuyaux (54, 56, 64, 69) immergés constituant les circuits de réchauffage et de recyclage de l'eau du bac (13), ainsi que l'échangeur sont supportés par des châssis (71-73) antivibratoires.

## Claims

1. Independant central power station for obtaining a fluid in gaseous state by reheating cryogenic fluids in liquid state, comprising a heat generator (1) a vat (2) a reheating circuit (11) of the vat water (13) a heat exchanger (25) having one or more coils immerged in the vat, pressure-regulating means and security control means, whereby the heat exchanger may be a warm water source or the ambient atmosphere or a compressed and heated gas, these elements being stationary or installed on a road vehicle, characterized by the fact that the reheating water is constantly recycled by means of diffusion racks (54) occupying the upper part of the vat (13) and aspiration racks (56) placed near the bottom of the vat (13) and connected with pumps (16) ; that the recycling circuit of the reheating water is controlled by a self-acting regulator (20) driving a three-ways sluice-gate (21) which orientates the water either to the heat generator (1) or again to the vat (13) according to the noticed temperature and depending on the scheduled temperature.

2. Central power station according to claim 1, characterized by the fact that diffusion racks of the reheating water, feeding the vat (13) comprise at least four pipes (54) connected together by a transverse main (53) communicating with a feed piping (11), each pipe (54) being closed at its end opposite to the main and bored on its lower part at regular spaces and along its whole length, of holes (55).

3. Central power station according to claim 1, characterized by the fact that the aspiration racks (56) of the reheating water comprise at least two longitudinal pipes (56) each of them being bored of baffle-holes (57) and closed at one end and joined at the other end by a main (58) communicating with a return piping (15) to the heat generator (1).

4. Central power station according to claim 1, characterized by the fact that the vat (13) has a false bottom (50), that its first bottom, side walls and cover are heat-proof.

5. Central power station according to claim 1, characterized by the fact that the immerged tubes and pipes (54, 56, 64, 69) composing the reheating and recycling circuits of the water of the vat (13) as well as the exchanger are carried by antivibratory frames (71, 73).

## Ansprüche

1. Selbstständige Kraftzentrale für die Erzeugung einen Fluidum in gasartigen Zustand durch Erwärmung von cryogenischen Fluiden in Flüssigen Zustand, bestehend aus einen Wärmeentwickler (1), ein Becken (13), eine Erwärmungsleitung (11), des Beckenwasser (13), ein Austauchapparat (25), mit eine oder mehrere in den Becken eintauchenden Heizschlängen, Mitteln für die Drucksregulierung und die Sicherheitsüberwachung, wobei der Wärmeentwickler eine warme Wasserquelle oder die umgependen Atmosphäre oder ein komprimiertes und erwärmtes Gas sein können, wobei diese Elemente unbeweglich oder auf einen Kraftfahrzeug eingerichtet sein können, dadurch gekennzeichnet dass das Erwärmingswasser beständig durch Diffusionsrampen (54) rückgeführt ist, die der oberen Teil des Beckens (13) einnehmen und durch Saugrampen (56) die nahe dem Beckenboden (13) sitzen und mit Pumpen (16) verbunden sind ; dass die Rückführungsleitung des Erwärmungswasser durch einen selbsttätigen Regler (20) kontroliert ist der einen Dreiwegventil (21) steuert zur Orientierung des Wasser entweder nach den Wärmeentwickler (1) oder wiederum nach dem Becken (13) gemäss die festgestellte Temperatur und hinsichtlich der programmierte Temperatur.

2. Selbstständige Kraftzentrale gemäss Anspruch 1, dadurch gekennzeichnet dass die Diffusionsrampen des Erwärmungswasser die dem Becken (13) speisen, am mindestens aus vier Röhren (54) bestehen, die durch einen transversalen Sammelrohr (53) zwischen sich verbunden sind, das mit eine Speiserohrleitung (11) in Verbindung steht, wobei jedes Rohr (54) an seinem den Sammelrohr entgegengesetzten Ende geschlossen und an seinem unteren Ende auf regelmässige Abstände und auf seine ganzen Länge von Löcher (55) gebohrt ist.

3. Selbstständige Kraftzentrale gemäss Anspruch 1, dadurch gekennzeichnet dass die Saugrampen (56) des Erwärmungswasser am mindestens aus zwei Längenröhren (56) bestehen, die jedes von Löchern (57) in Zickzackrichtung gebohrt, an einem Ende geschlossen und am andere End durch einen Sammelrohr (58) verbunden sind, das mit einer Rücklaufleitung (15) zum Wärmeentwickler (1) in Verbindung gesetzt ist.

4. Selbstständige Kraftzentrale gemäss Anspruch 1, dadurch gekennzeichnet dass das Becken (13) einen Doppelboden besitzt (50), dass seinen ersten Boden, seine Seitenwände und sein Deckel hitzebeständig sind.

5. Selbstständige Kraftzentrale gemäss Anspruch 1, dadurch gekennzeichnet dass die eintauchenden Röhren und Leitungen (54, 56, 64, 69) die die Erwärmungs- und Rücklaufleitungen des Wasser des Becken (13) bilden, sowie der Austauchapparat auf erschütterungsfreie Rahmen (71, 73) aufgetragen sind.

Fig.1

Fig.1a

Fig.1b

Fig_2

S3　E3

13a

53　54

68

E4

D

13

67

64

66

64

65

63

64

64

69

D

0014197

C

C

13c

58　50　56　60　51　52

B

B

Fig_3

Fig_4

13a

13

E4

60

40

61

59

56

56

69

53

58

6

Fig_5

Fig_7

S1  E2  E1  S2  S1

13b

64

68

13

63

64

8

50  69  40  69  51

13c

Fig_6

72  71

71

73

71

72

0014197